# FASCICULE DE BREVET EUROPEEN

(11) **EP 0 702 656 B1**
(45) Date de publication et mention de la délivrance du brevet: **29.01.1997**
(21) Numéro de dépôt: 94918922.9
(22) Date de dépôt: 14.06.1994
(51) Int. Cl.: B65G 5/00, F17C 3/00

(54) **PROCEDE DE MISE EN SERVICE D'UNE CAVITE DE STOCKAGE SOUTERRAIN D'HYDROCARBURE A BASSE TEMPERATURE ET INSTALLATION DE STOCKAGE D'HYDROCARBURE A BASSE TEMPERATURE**
VERFAHREN ZUR INBETRIEBNAHME EINES UNTERIRDISCHEN HOHLRAUMES FÜR DIE LAGERUNG VON KOHLENWASSERSTOFFEN BEI NIEDRIGER TEMPERATUR UND LAGERVORRICHTUNG FÜR KOHLENWASSERSTOFFE BEI NIEDRIGER TEMPERATUR
METHOD FOR SETTING IN OPERATION AN UNDERGROUND STORAGE CAVITY FOR LOW TEMPERATURE HYDROCARBONS AND PLANT FOR STORING LOW TEMPERATURE HYDROCARBONS

(30) Priorité: 18.06.1993 FR 9307429
(43) Date de publication de la demande: 27.03.1996
(73) Titulaire: Société Française de Stockage Géologique dite "GEOSTOCK", F-92563 Rueil-Malmaison Cédex (FR); SOCIETE NOUVELLE TECHNIGAZ, 78180 Montiny-le-Bretonneux (FR)
(72) Inventeur: BAUDEMENT, Marie-Aleth, F-78100 Saint-Germain-en-Laye (FR); LONDE, Louis, F-92420 Vaucresson (FR)
(74) Mandataire: Pinguet, André
(86) Numéro de dépôt international: FR9400705
(87) Numéro de publication internationale: WO9500421

(56) Documents cités:
- DE-A- 2 454 941
- DE-A- 2 507 424
- FR-A- 1 459 749
- GB-A- 2 215 023
- US-A- 3 424 662
- US-A- 3 925 992

## Description

La présente invention concerne un procédé de mise en service d'une cavité de stockage souterrain d'hydrocarbure maintenu sous forme liquide à basse température, largement en dessous de 0°C. L'invention peut s'appliquer notamment au stockage de gaz naturel liquéfié (GNL) sous une température de -162°C à la pression atmosphérique. Cependant tout autre hydrocarbure liquéfié à très basse température tel que l'éthylène par exemple pourra être stocké selon le procédé que définit la présente invention.

La technique des stockages dits cryogéniques permet d'avoir en réserve un produit à la pression atmosphérique. La température est alors la température d'équilibre gaz/liquide à la pression normale, qui, pour le GNL, est de -162°C. Par extraction de la phase gazeuse, puis condensation et réinjection sous forme liquide, on peut maintenir le stockage à température constante.

Divers procédés ont déjà ête proposés pour stocker des gaz liquéfiés à basse tempértaure. La cavité de stokage alors utilisée peut être formée dans un sous-sol argileux procurant une bonne étanchéité, mais dans la plupart des procédés connus, la cavité utilisée est creusée dans un sous-sol rocheux imprégné d'eau. Pour du propane par exemple, liquifiable à pression normale à une température moyennement basse, la cavité de stockage ne nécessiste pas de traitement préalable particulier. Les parois internes de la cavité sont constituées par de la roche imprégnée d'eau. L'introduction du gaz liquéfié à basse température largement en dessous de 0°C a pour effet de geler les parois internes de la cavité, et de constituer ainsi une barrière étanche de glace. Selon une autre méthode, de l'azote peut être préalablement injecté dans la cavité pour en geler les parois internes. Le propane est alors introduit dans une cavité déjà étanchéifiée. Du fait de sa température de liquéfaction moyennement basse, les parois internes de la cavité ne subissent que de faibles contraintes sans préjudice sur l'étanchéité de la cavité de stockage. Ces contraintes sont en effet trop faibles pour générer des fissures dans la roche.

Pour le stockage d'hydrocarbures présentant à pression normale une température de liquéfaction beaucoup plus basse, tel que du GNL ou de l'éthylene, il n'est pas possible de laisser l'hydrocrabure en contact avec la roche imprégnée d'eau gélée. Les contraintes alors exercées sur la roche sont considérables, ce qui engendre soit l'agrandissement de fissures déjà existantes dans la roche avant le creusement de la cavité, soit la formation de nouvelles fissures en début ou en cours de fonctionnement de l'installation de stockage. Selon le cas, ces fissures entraînent des venues d'eau qu'on peut difficilement arrêter, surtout si elles n'apparaissent qu'après le début de la mise en froid, ou encore des fuites de gaz vers la surface qui, elles aussi, ne sont généralement décelées qu'après le début de la mise en froid ou du fonctionnement de l'installation.

Une augmentation de la température de stockage grâce à une augmentation de la pression permettrait de revenir à des conditions de stockage analogues à celles existantes pour le stockage du propane. Cependant pour des raisons pratiques liées à l'exploitation, cette possibilité est éliminée.

Pour remédier à ce problème lié à la fissuration de la roche, il est déjà connu de doter la cavité d'un revêtement interne étanche scellé à la roche.

Il est cependant nécessaire de prendre en compte la présence d'une nappe phréatique autour de la cavité : en effet, la probabilité de trouver une telle nappe à la profondeur envisagée pour le stockage (50 à 100m) est grande. De plus, la nappe présente un avantage que l'on cherche à exploiter : en gelant, l'eau constitue une deuxième barrière d'étanchéité.

Lors de la mise en service d'une cavité ainsi revêtue, il est néfaste de laisser la glace se former au contact même du revêtement interne. Celui-ci est en général boulonné dans la roche et la surpression exercée par la formation de lentilles de glace pourrait désancrer les boulons et déformer le revêtement. D'autre part, en phase initiale avant introduction d'hydrocarbure à très basse température, la pression qu'exerçait l'eau de la nappe phréatique non encore gelée serait également néfaste au revêtement. C'est pourquoi il est nécessaire de maintenir entre le revêtement interne et la barrière de glace une zone désaturée.

La demande de brevet GB-A-2 215 023, qui correspond au préambule de la revendication 1, propose une solution en définissant une caverne de stockage comprenant un revêtement interne constitué principalement d'une couche imperméable disposée à l'intérieur de la caverne et d'une couche de béton perméable donnant vers la roche. La couche de béton poreux contient un réseau de tube installé tout autour de la caverne. Par injection d'air dans le réseau de tubes avec une pression supérieure à celle de l'eau souterraine, on parvient à repousser l'eau souterraine par infiltration de l'air dans les fissures préexistantes dans la roche. Une zone exempte d'eau souterraine est ainsi établie autour de la caverne. L'hydrocarbure peut alors être introduit dans la caverne. Au bout d'un certain temps, la zone d'équilibre eau/air est gagnée par le gel sous l'effet du stockage à basse température. Il se forme alors une barrière de glace éloignée du revêtement interne. Le brevet anglais prévoit aussi de creuser un tunnel de drainage en dessous de la caverne pour diminuer la pression de l'eau souterraine. La mise en oeuvre d'une telle caverne incorporant un réseau d'injection d'air est d'une complexité importante et d'un coût de réalisation sans doute en rapport.

La présente invention a pour but un procédé simplifié et peu coûteux de mise en service d'une cavité de stockage d'hydrocarbure à très basse température.

L'invention définit également une installation de stockage capable de recevoir de l'hydrocarbure à très basse température c'est-à-dire adaptée à supporter les contraintes liées à l'introduction de l'hydrocarbure.

Pour ce faire, l'invention a pour objet un procédé selon la revendication 1.

Le drainage peut avantageusement trouver son utilité également lors de l'excavation du site, puisque les écoulements et effets de surpression disparaissent. De même lors de l'installation du revêtement interne, l'eau pourrait constituer une gêne. Un système de drainage étant prévu pour la mise en service de la cavité, il sera commode de s'en servir préalablement pour faciliter les conditions de travail pendant la formation de la cavité. Contrairement à la caverne proposée par le brevet GB-A-2 215 023, la formation d'une zone sensiblement exempte d'eau est indépendante de la structure du revêtement interne de la cavité. Il est donc possible de mettre en oeuvre le procédé de la présente invention avec n'importe quel type de cavité destinée à l'usage des hydrocarbures à très basse température.

Selon une forme de réalisation, l'opération de drainage comprend l'opération de pomper l'eau souterraine à partir de puits de drainage creusés à proximité de la cavité.

Il est à noter que le but de l'opération de drainage est de rabattre la nappe phréatique en dessous du niveau de la cavité et non seulement de diminuer la pression qu'elle exerce au niveau de la cavité. De plus, la technique de percement de puits de drainage est beaucoup moins lourde que celle nécessaire à la formation d'un tunnel de drainage réalisé en contrebas de la cavité.

Avantageusement, l'étape d'arrêter le drainage comprend l'opération de laisser remonter la nappe phréatique en diminuant progressivement le drainage.

Ainsi, le drainage n'est pas stoppé brutalement, mais progressivement, afin de pouvoir contrôler parfaitement le retour de l'eau autour de la cavité. Ce contrôle du drainage est réalisé par réglage des pompes disposées en fond de puits ou du débit d'air injecté depuis la surface.

Selon une autre technique, l'étape d'arrêter le drainage comprend l'opération de laisser geler les puits de drainage.

Le présent procédé trouve particulièrement son application, lorsque l'hydrocarbure est stocké dans la cavité à une température inférieure à -50°C, et de préférence inférieure à -100°C.

Pour les hydrocarbures liquéfiés à une température supérieure, le problème de fissuration de la roche ne se présente normalement pas.

L'invention prévoit aussi une installation de stockage souterrain selon la revendication 6.

La membrane d'étanchéité est doublement sollicitée thermiquement et mécaniquement. D'une part, par la variation de température engendrant des contraintes thermiques importantes et, d'autre part, par les déplacements éventuels de blocs de roche. Les voussoirs peuvent être contraints individuellement par un déplacement de bloc de roche et déformer la membrane localement, sans préjudice pour l'étanchéité du revêtement.

Avantageusement, des puits de drainage s'étendant jusqu'à une profondeur située en dessous de la cavité sont prévus à proximité de cette dernière pour rabattre la nappe phréatique en dessous de la cavité.

Le rabattement de la nappe phréatique permet la formation d'une zone sensiblement exempte d'eau autour de la cavité. Ces puits ne trouvent leur utilité qu'en phase initiale d'exploitation de la cavité. Une fois la zone exempte d'eau stabilisée par le front de glace engendré par la présence d'hydrocarbure à très basse température, ils peuvent être abandonnés et même détruits. Les puits creusés verticalement à proximité de la cavité constituent un moyen d'empêcher la formation de lentilles de glace à proximité directe de la cavité, mais celui-ci présente le maximum d'avantages techniques et économiques.

Selon une caractéristique de l'invention, les voussoirs sont juxtaposés bord à bord en définissant un maillage régulier, la membrane d'étanchéité comportant un réseau d'ondes orthogonales dont certaines ondes au moins sont alignées avec les bords des voussoirs.

Les ondes orthognales confèrent à la membrane un aspect gaufré avec des plis entrecroisés. Ces plis constituent le lieu privilégié des déformations que la membrane peut supporter, c'est pourquoi il est essentiel de les aligner avec les limites séparatives des voussoirs. Lors d'un déplacement d'un voussoir, la contrainte exercée sur la membrane sera directement encaissée par les ondes bordant ledit voussoir. Cette caractéristique permet encore d'améliorer la déformabilité du revêtement.

Selon une autre caractéristique, le révêtement comprend en outre, entre la membrane et la structure porteuse, une couche formée de panneaux isolants juxtaposés définissant un maillage coïncidant en superposition avec celui des voussoirs.

Les panneaux isolants ont pour fonction d'isoler thermiquement la cavité du sous-sol environnant mais également des voussoirs. La caractéristique de déformabilité est alors assurée par la superposition des maillages des voussoirs et des panneaux isolants. Ainsi chaque panneau isolant n'est dépendant que d'un voussoir. On a un alignement successif des bords des voussoirs et des panneaux isolants avec certaines ondes de la membrane.

La présente invention sera maintenant décrite plus amplement, en regard des dessins annexés donnant à titre d'exemple non limitatif un mode de réalisation de l'invention.

Sur les dessins :
- la figure 1 est une vue en coupe d'une cavité de stockage à conditionner selon le procédé de la présente invention,
- la figure 2 est une représentation agrandie du détail de la structure d'un revêtement interne tapissant la cavité de la figure 1,
- la figure 3 est une vue en coupe d'un revêtement selon la présente invention visant à illustrer la mise en oeuvre des voussoirs,
- la figure 4 est une vue de face d'un voussoir,
- la figure 5 est une vue générale de la disposition des voussoirs sur la paroi interne de la cavité,
- la figure 6 est une vue en coupe au travers d'un revêtement selon l'invention,
- la figure 7 est une vue agrandie d'un détail du revêtement de la figure 6,
- la figure 8 est une vue de face montrant un voussoir revêtu d'une membrane d'étanchéité gaufrée selon l'invention,
- la figure 9 estune vue en coupe selon la ligne B-B de la figure 8,
- la figure 10 est une vue en coupe selon la ligne A-A de la figure 8, et
- la figure 11 est un schéma de principe visant à illustrer les différentes étapes du procédé mis en oeuvre sur une cavité identique à celle de la figure 1.

Comme déjà précisé ci-dessus, le présent procédé s'applique plus particulièrement au GNL, sans pour autant exclure d'autres types d'hydrocarbure à température très basse de liquéfaction à la pression atmosphérique. Dans la description qui va suivre, il sera fait référence au GNL car étant le plus approprié.

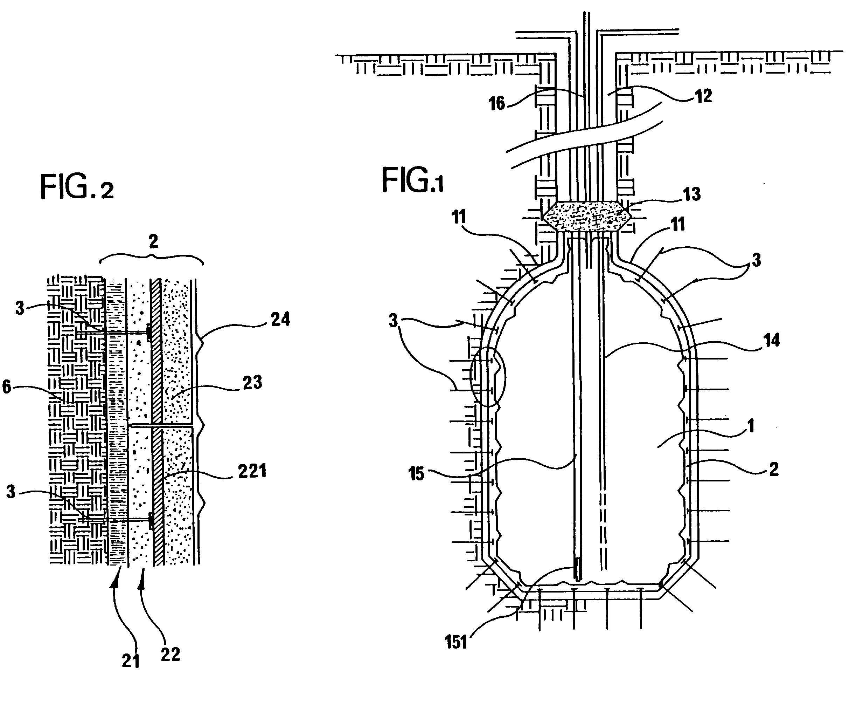

La cavité 1 représentée sur la figure 1 est formée dans un sous-sol rocheux traversé par une nappe phréatique, à environ 50 mètres de profondeur au niveau de sa voute 11. Elle communique avec la surface par un puits 12. La cavité 1 est scellée au niveau du puits 12 par un bouchon 13 ancré dans la roche. Le bouchon 13 est traversé par une série de tubes nécessaires à l'exploitation du stockage.

Les parois internes de la cavité 1 sont tapissées avec un revêtement 2 étanche et isolant Le revêtement 2 recouvre la totalité de la cavité jusqu'au bouchon 13. Le détail de la structure du revêtement est représenté sur les figures 2 à 10.

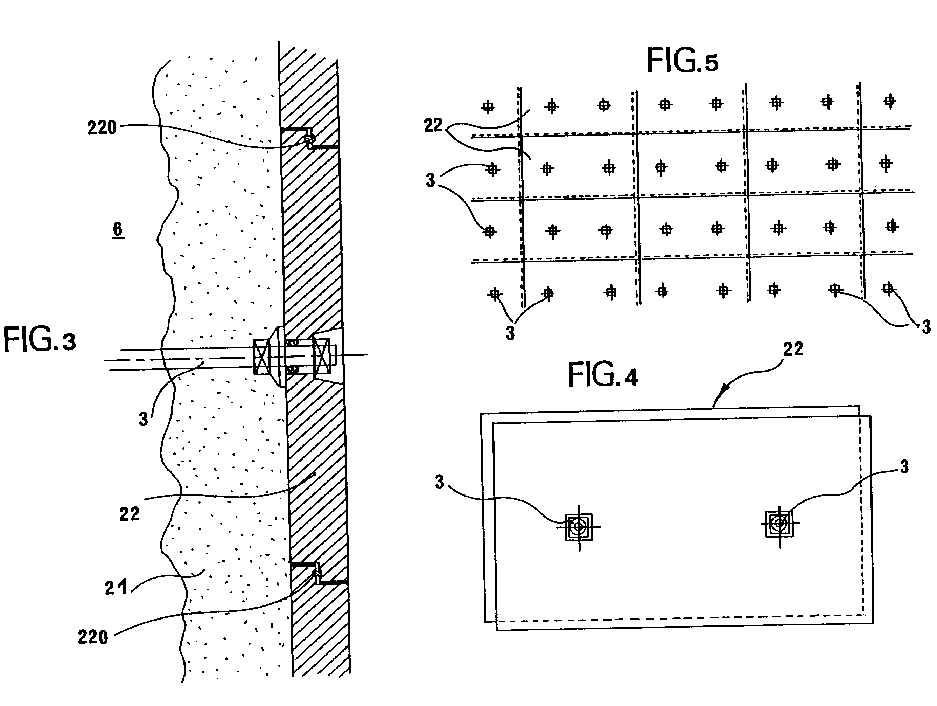

Sur la figure 2, on a représenté une coupe au travers du revêtement 2 correspondant à l'encadre de la figure 1. La roche brute 6 sur la figure 2 est faussement représentée avec une surface lisse. En fait, la roche brute excavée est souvent irrégulière, comme représenté sur la figure 3. Des plaques de béton préfabriquées ou "voussoirs "22 sont d'abord ancrées au rocher au moyen de tirants 3.

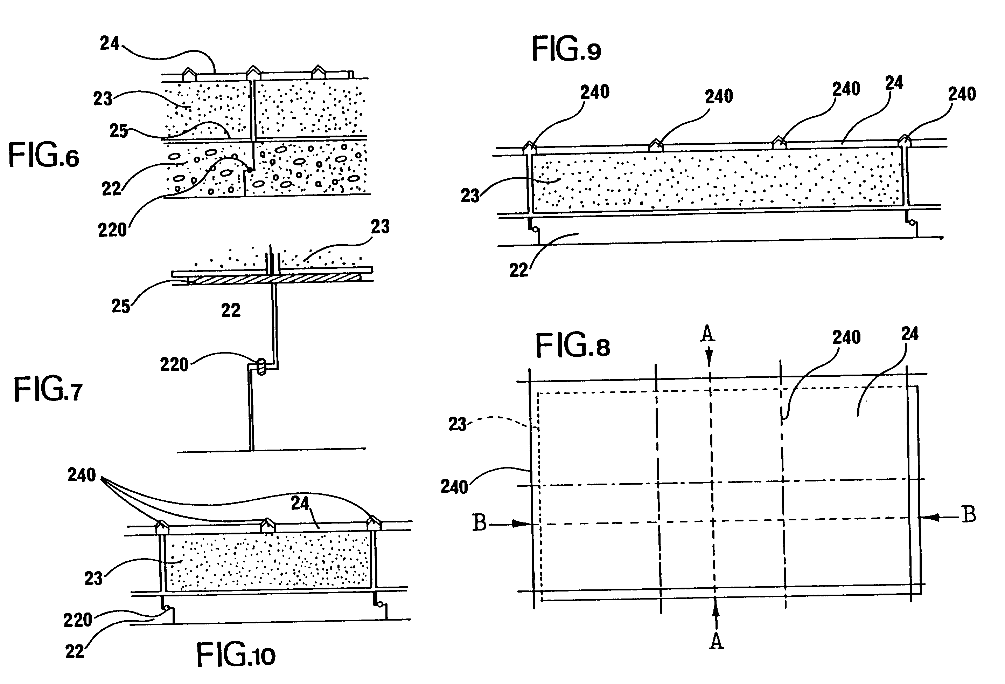

Ces plaques sont mécaniquement indépendantes les unes des autres et suivent librement les mouvements du rocher sans introduire de contraintes dans la stucture constituée de voussoirs. Cette structure est en fait une structure porteuse pleine sur laquelle les autres éléments du revêtement seront fixés. Le béton utilisé pour les voussoirs est avantageusement armé de tiges de fer. On peut remarquer sur la figure 3 que les voussoirs 22 ne sont pas directement appliqués contre la roche brute 6. Dans le cas où la roche est très fortement accidentée, un coulis de béton mousse 21 d'une faible densité est injecté au fur et à mesure de la pose des voussoirs, comme montré sur les figures 2 et 3. Par contre, lorsque les défauts locaux de la roche n'excèdent pas 20 cm environ, l'espace entre le voussoirs 22 et la roche 6 est laissé vide. Les voussoirs présentent alors une épaisseur d'environ 30 cm et sont fixés au moyen de trois tirants, alors que, dans le cas d'une roche accidentée, les voussoirs font environ 15 cm d'épaisseur et sont fixés par deux tiges seulement. Le béton mousse 21 a pour but de transmettre la pression exercée par le liquide stocké au rocher. La structure porteuse formée de voussoirs 22 est étanchéifiée à l'aide de joints 220 disposés entre chaque voussoir. Le pourtour des voussoirs 22 est formé en escalier. En se référant à la figure 4, on remarque que les voussoirs sont formés en une seule pièce et se présentent telles deux plaques de béton de dimension identique et décalés diagonalement l'un par rapport à l'autre de façon à réaliser sur tout le pourtour du voussoir, une marche. Le voussoir de la figure 4 est conçu pour être fixé sur une roche accidentée, car ne présentant que deux tirant 3. Le joint 220 prend place au milieu de la marche dont la forme est complémentaire à la marche du voussoir adjacent, comme on peut le voir sur la figure 3. Par cette disposition des voussoirs 22, ils peuvent se déplacer indépendamment en jouant sur la résilience du joint 220. A titre indicatif les voussoirs présentent une largeur de 1 mètre environ pour une longueur de 2 mètres environ. De préférence, les voussoirs sont disposés selon un maillage régulier, comme sur la figure 5. Cela permet à chaque voussoir 22 de se déplacer plus librement, car uniquement dépendant de quatre autres voussoirs.

La face interne des voussoirs 22 est ensuite revêtue d'une couche pare-vapeur 221 constituée d'un bicomposant epoxy, et destinée à éviter la migration d'humidité, de la paroi rocheuse vers la couche suivante 23. Ce type de pare-vapeur est similaire à celui utilisé pour les réservoirs aériens. Mais étant donné l'utilisation des voussoirs, il sera appliqué de préférence avant montage de voussoirs.

Des goujons ou "spits" sont également appliqués dans les voussoirs 22 pour la pose de panneaux isolants 23 constituant la couche suivante.

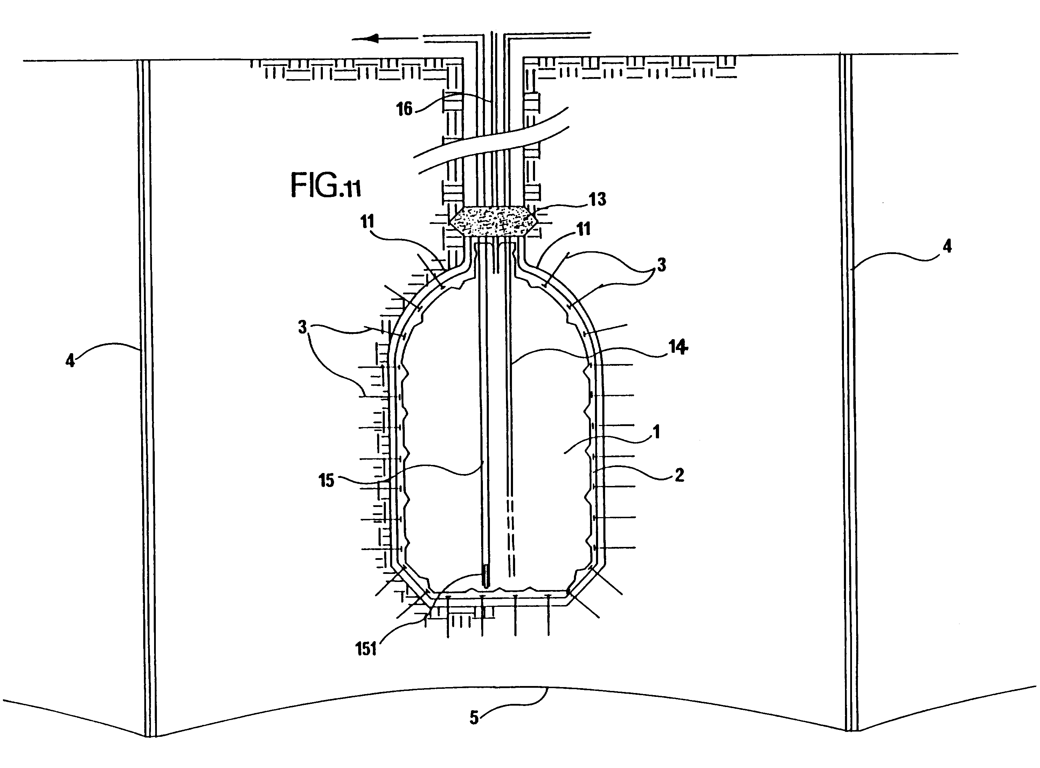

La structure du panneau isolant 23 est constituée de matériau cellulaire rigide, genre PVC, contrecollé sur ses deux faces avec du contreplaqué. L'épaisseur d'isolant est d'environ 30 cm. Selon une caractéristique avantageuse de l'invention, les dimensions de panneaux isolants 23 coïncident avec les dimensions des voussoirs 22 et de plus les panneaux isolants sont disposés de telle manière qu'à chaque voussoir 22 ne correspond qu'un panneau isolant 23 qui lui est parfaitement superposé comme représenté sur les figures 6 et 7. De cette façon, le déplacement d'un voussoir est plus facilement permis, car il n'entraînera qu'un seul panneau isolant 23. Les panneaux sont collés au béton des voussoirs 22 au moyen de mastic déposés sur la face intérieure. La mise en position et le maintien en pression sont réalisés grâce aux goujons placés sur le voussoirs 22. Enfin, de la laine de verre est placée dans l'espace entre chaque panneau 23 pour assurer la continuité thermique. L'utilisation d'une couche isolante 23 n'est pas obligatoire dans 5 toutes les circonstances. Le revêtement pourra remplir sa fonction, dans bien des cas, sans interposition de panneaux isolants 23.

Des pièces métalliques en acier inoxydable appelés "macarons" sont insérées dans le contre-plaqué supérieur du panneau isolant pour l'ancrage d'une membrane d'étanchéité déformable 24 constituant la surface interne de la cavité. Cette membrane 24 en acier inoxydable, de 1,2 mm d'épaisseur environ, présente un aspect gaufré et était prévue à l'origine à l'usage des stockages en surface et des bateaux méthaniers. Une telle membrane est décrite dans le brevet FR-A-1 459 749. Elle présente un système d'ondes orthogonales entrecroisées qui lui confère une grande déformabilité. Cette déformabilité qui lui permet de supporter avec un faible niveau de contraintes les contractions thermiques générées par le GNL à -162°C, est aussi mise à profit, dans le cas particulier, pour lui permettre de supporter les déformations potentielles du rocher, sans perte de ses qualités d'étanchiété.

Pour obtenir une grande déformabilité sur l'ensemble du revêtement interne 2 les joints des voussoirs 22 et des panneaux isolants 23 sont alignés avec les ondes 240 de la membrane d'étanchéité 24, comme représenté sur les figures 9 et 10 qui sont des coupes transversales orthogonales au travers du revêtement 2. Le réseau d'ondes de la membrane 24 peut présenter plusieurs ondes par voussoirs comme représenté sur la figure 8. La caractéristique essentielle est que les voussoirs 22 et/ou les panneaux isolants 23, s'il existent, soient bordés d'ondes. En effet, ces ondes constituent le siège privilégié des déformations que peut supporter la membrane 24. Il est donc primordial que les joints des voussoirs 22 et des panneaux isolants 23 et certaines ondes de la membrane 24 soient alignés.

La membrane 24 se présente, au montage, sous forme de tôles gaufrées de environ 3 mètres sur 1 mètre qui sont ensuite soudées entre elles et attachées au panneau isolant 234 par soudage sur le macaron situé au centre de chaque maille.

Les voussoirs 22 servent également de structure de support pour la membrane, car elle ne peut pas être montée sur un support accidenté tel que la roche brute. Le choix d'une structure en voussoirs plutôt qu'en couche de béton coffré permet aussi de reprendre les contraintes de tractions thermique générées par le GNL à -162°C au travers de la membrane 24 et du panneau isolant 23, s'il existe.

L'utilisation en combinaison d'une membrane d'étanchéité déformable et d'une structure de support "flottante" permet la réalisation d'un revêtement inteme étanche, mais cependant déformable, pouvant s'adapter aux déplacements de la roche engendrés par les variations de température causées par l'introduction de GNL.

Le procédé de mise en service de la cavité 1 selon la présente invention sera maintenant décrit en application à une cavité telle que définie ci-dessus. Des cavités ayant une autre structure pourront également être traitées selon le présent procédé, mais la cavité décrite s'y prête le mieux. En se référant à la figure 11, des puits de drainage 4 ont été percés à proximité de la cavité 1, de préférence distants de la cavité de 2 à 20 mètres. Les puits 4 s'étendent en-dessous du niveau du fond de la cavité. Chacun est pourvu d'une pompe en fond de puits ou d'une conduite reliée à un compresseur en surface afin de pratiquer l'opération dite de l'"air lift". Selon l'invention, la première étape consiste à drainer l'eau de la nappe phréatique jusqu'à rabattement de celle-ci en dessous du niveau du fond de la cavité. La cavité 1 à l'origine entourée d'eau se retrouve alors dans un sous-sol rocheux sensiblement exempt d'eau. En réalité, il subsiste toujours dans la roche une certaine quantité d'eau prisonnière par capillarité. Le but recherché n'est pas de désaturer le sous-sol environnant la cavité, mais d'en extraire sufissament d'eau pour éviter le gel de trop grosses lentilles de glace pouvant entraîner des fissures de la roche. Cette étape de rabattement de la nappe pourra d'ailleurs être effectuée lors de la formation de la cavité. Il sera alors plus aisé d'installer le revêtement interne 2 sur les parois de la cavité.

L'étape de drainage doit être poursuivie pour maintenir la nappe 5 à un niveau constant en dessous de la cavité 1. Tout en continuant à pomper, la seconde étape consiste à introduire du GNL dans la cavité 1 à une température de -162°C à la pression atmosphérique. Malgré la couche thermiquement isolante 232 du revêtement 2, le sous-sol environnant la cavité atteint une température suffisamment basse pour geler le restant d'eau encore contenue dans la roche. Il se forme alors tout autour de la cavité une zone gelée sensiblement exempte d'eau. Le peu d'eau maintenant gelé ne peut causer de fissures de la roche néfastes pour le revêtement 2 de la cavité 1. A titre d'exemple, ladite zone gelée exempte d'eau atteint une épaisseur d'environ 2 mètres au bout de quelques mois de présence de GNL dans la cavité 1. Autour de cette zone gelée peut subsister dans la roche drainée de faibles quantités d'eau sous forme liquide.

Une fois que la zone gelée a atteint une épaisseur suffisante, environ 2 mètres, le drainage peut être stoppé. Une épaisseur suffisante est celle nécessaire pour que, d'une part, l'eau gèle lors de sa migration vers la cavité, et que, d'autre part, un anneau gelé épais puisse reprendre les pressions hydrauliques venant de l'extérieur. En diminuant progressivement le drainage, on peut contrôler parfaitement la remontée de la nappe autour de la cavité. Une fois le drainage totalement stoppé, il subsiste tout autour de la cavité 1 une zone exempte d'eau délimitée par un front de glace. Au-delà de ce front de glace, la nappe phréatique 5 est à l'état liquide.

Une autre technique, bien que moins préférentielle, consiste à laisser geler les puits de drainage 4. On continue donc en permanence à pomper la nappe phréatique 5 jusqu'à ce que la zone gélée générée par le GNL gagne les puits de drainage 4. Cette solution présente néanmoins le désavantage de ne pas pouvoir contrôler la remontée de l'eau après le gel des puits 4. Tant que la cavité reste en service et contient du GNL, on est sûr de la subsistance de la zone exempte d'eau.

Il va de soi que le mode de réalisation décrit n'est qu'un exemple et qu'il serait possible de mettre en oeuvre le présent procédé sur n'importe quelle cavité de stockage d'hydrocarbure à très basse température.

## Revendications

1. Procédé de mise en service d'une installation de stockage souterrain comprenant une cavité (1) de stockage souterrain destinée à recevoir un hydrocarbure maintenu sous forme liquide à très basse température en dessous de 0°C, la cavité étant formée dans une nappe phréatique (5) et comprenant un revêtement interne étanche (2), caractérisé en ce que le procédé comprend les étapes suivantes :
- dans une phase initiale dans laquelle la cavité (1) reste vide d'hydrocarbure, drainer l'eau contenue dans la roche jusqu'à rabattement de la nappe phréatique (5) en dessous de la cavité (1) ;
- introduire de l'hydrocarbure liquide à basse température dans la cavité (1) tout en continuant à drainer, de sorte que le sous-sol drainé environnant la cavité (1) atteint une température suffisamment basse pour geler l'eau ;
- arrêter le drainage de façon à laisser se former autour de la cavité (1) une zone périphérique sensiblement exempte d'eau délimitée par une barrière de glace.

2. Procédé selon la revendication, dans lequel l'opération de drainage comprend l'opération de pomper l'eau souterraine à partir de puits de drainage (4) creusés à proximité de la cavité (1) et s'étendant jusqu'en dessous de celle-ci.

3. Procédé selon la revendication 1 ou la revendication 2, dans lequel l'étape d'arrêter le drainage comprend l'opération de laisser remonter la nappe phréatique (5) en diminuant progressivement le drainage.

4. Procédé selon 1 revendication 1 ou la revendication 2, dans lequel l'étape d'arrêter le drainage comprend l'opération de laisser geler les puits de drainage (4).

5. Procédé selon l'une quelconque des revendications précédentes, dans lequel l'hydrocarbure est stocké dans la cavité (1) à une température inférieure à -50°C.

6. Installation de stockage souterrain mise en service par le procédé selon l'une quelconque des revendications précédentes, caractérisée en ce que le revêtement interne étanche (2) comprend au moins une structure porteuse pleine fixée à la roche et formée de voussoirs indépendants (22) capables d'un déplacement relatif les uns par rapport aux autres et une membrane d'étanchéité déformable (24) supportée par ladite structure et définissant l'intérieur de la cavité (1) de sorte que le revêtement (2) admet des contraintes et déformations engendrées par l'introducion de l'hydrocarbure à très basse température même après remontée de la nappe phréatique (5).

7. Installation de stockage selon la revendication 6, dans laquelle des puits de drainage (4) s'étendant jusqu'à une profondeur située en dessous de la cavité sont prévus à proximité de cette dernière pour rabattre la nappe phréatique en dessous de la cavité.

8. Installation de stockage selon la revendication 6 ou la revendication 7, dans laquelle les voussoirs (22) sont juxtaposés bord à bord en définissant un maillage régulier, la membrane d'étanchéité (24) comportant un réseau d'ondes orthogonales dont certaines ondes au moins sont alignées avec les bords des voussoirs afin de conférer au revêtement une flexibilité nécessaire pour s'adapter aux déplacements de la roche engendrés par les variations de température causées par l'introduction de l'hydrocarbure.

9. Installation de stockage selon la revendication 6, 7 ou 8, dans laquelle le révêtement comprend en outre, entre la membrane (24) et la structure porteuse, une couche formée de panneaux isolants juxtaposés définissant un maillage coïncidant en superposition avec celui des voussoirs (22).

## Patentansprüche

1. Verfahren zur Inbetriebnahme einer unterirdischen Speichereinrichtung, die einen unterirdischen Speicherhohlraum (1) umfaßt, der dazu dient, einen Kohlenwasserstoff aufzunehmen, der bei einer sehr niedrigen Temperatur unterhalb von 0°C in flüssiger Form gehalten wird, wobei der Hohlraum in einer Grundwasserschicht (5) ausgebildet ist und eine dichte Innenauskleidung (2) umfaßt, dadurch **gekennzeichnet,** daß das Verfahren die folgenden Schritte umfaßt:
- Abpumpen des im Gestein enthaltenen Wassers bis zur Absenkung der Grundwasserschicht (5) unterhalb des Hohlraumes (1) in einer Anfangsphase, in welcher der Hohlraum (1) von Kohlenwasserstoff entleert bleibt;
- Einbringen des flüssigen Kohlenwasserstoffs mit niedriger Temperatur in den Hohlraum (1) bei fortgesetztem Entwässern in der Weise, daß der entwässerte Untergrund, der den Hohlraum (1) umgibt, eine Temperatur annimmt, die ausreichend niedrig ist, um das Wasser zum Gefrieren zu bringen;
- Beenden des Entwässerns in der Weise, daß man sich um den Hohlraum (1) herum eine Umgebungszone ausbilden läßt, die im wesentlichen von Wasser befreit und von einer Eissperre begrenzt ist.

2. Verfahren nach Anspruch 1, bei dem der Vorgang des Entwässerns den Vorgang umfaßt, daß das unterirdische Wasser aus Entwässerungsschächten (4) gepumpt wird, die in der Nähe des Hohlraums (1) ausgeschachtet worden sind und sich bis unterhalb des Hohlraumes erstrecken.

3. Verfahren nach Anspruch 1 oder 2, bei dem der Schritt des Beendens der Entwässerung den Vorgang umfaßt, daß man die Grundwasserschicht (5) dadurch wieder ansteigen läßt, daß man die Entwässerung fortschreitend vermindert.

4. Verfahren nach Anspruch 1 oder 2, bei dem der Schritt des Beendens der Entwässerung den Vorgang umfaßt, daß man die Abpumpschächte (4) gefrieren läßt.

5. Verfahren nach einem der vorhergehenden Ansprüche, bei dem der Kohlenwasserstoff im Hohlraum (1) bei einer Temperatur gespeichert wird, die unter -50°C liegt.

6. Einrichtung zur unterirdischen Lagerung, die gemäß dem Verfahren nach einem der vorhergehenden Ansprüche in Betrieb genommen wird, dadurch **gekennzeichnet,** daß die dichte Innenauskleidung (2) wenigstens eine vollständige Tragstruktur umfaßt, die am Gestein befestigt ist und aus unabhängigen Gewölbesteinen (22) gebildet ist, die in der Lage sind, sich relativ zueinander zu verschieben, sowie eine verformbare Abdichtungsmembran (24), die von dieser Struktur getragen ist und das Innere des Hohlraums (1) in der Weise umgrenzt, daß die Auskleidung (2) die Beanspruchungen und Verformungen zuläßt, die durch das Einbringen von Kohlenwasserstoff mit sehr niedriger Temperatur selbst nach dem Wiederansteigen der Grundwasserschicht (5) mit sich bringt.

7. Speichereinrichtung nach Anspruch 6, bei der die Entwässerungsschächte (4), die sich bis zu einer Tiefe unterhalb des Hohlraumes erstrecken, in der Nähe dieses Hohlraumes vorgesehen sind, um die Grundwasserschicht bis unterhalb des Hohlraumes abzusenken.

8. Speichereinrichtung nach Anspruch 6 oder 7, bei der die Gewölbesteine (22) nebeneinander Rand an Rand angeordnet sind, wobei sie ein regelmäßiges Netzwerk bilden, und daß die Abdichtungsmembrane (24) ein Geflecht von orthogonalen Wellen umfaßt, von denen wenigstens einige Wellen mit den Rändern der Gewölbesteine ausgerichtet sind, um der Auskleidung eine Flexibilität zu verleihen, die erforderlich ist, um sich an die Verschiebungen des Gesteins anzupassen, welche die Temperaturveränderungen mit sich bringen, die durch das Einbringen des Kohlenwasserstoffs bewirkt werden.

9. Speichervorrichtung nach Anspruch 6, 7 oder 8, bei der die Auskleidung im übrigen zwischen der Membran (24) und der Tragstruktur eine aus isolierenden, nebeneinander angeordneten Platten gebildete Schicht umfaßt, die ein Netzwerk bilden, das mit dem der Gewölbesteine (22) zusammenfällt und dieses überlagert.

## Claims

1. A method of putting into operation an underground storage installation into operation comprising an underground storage cavity (1), which cavity is designed to receive hydrocarbon that is kept in liquid form at very low temperature, below 0°C, the cavity being formed within a water table (5) and including a leakproof inner lining (2), the method being characterized in that it comprises the following steps:
in an initial step, while the cavity (1) does not contain hydrocarbon, draining the water contained in the surrounding rock until the water table (5) drops below the cavity (1);
inserting liquid hydrocarbon at low temperature into the cavity (1) while continuing to drain the water, such that the drained rock surrounding the cavity (1) reaches a temperature that is low enough to freeze water; and
stopping drainage so as to allow a substantially water-free peripheral zone to form around the cavity (1) as defined by a barrier of ice.

2. A method according to claim 1, in which the drainage operation includes an operation of pumping underground water from drainage wells (4) formed in the proximity of the cavity (1) and extending to a depth that is deeper than the cavity.

3. A method according to claim 1 or claim 2, in which the step of stopping drainage includes the operation of allowing the water table (5) to rise by reducing drainage progressively.

4. A method according to claim 1 or 2, in which the step of stopping drainage includes the operation of allowing the drainage wells (4) to freeze.

5. A method according to any preceding claim, in which the hydrocarbon is stored in the cavity (1) at a temperature of less than -50°C.

6. An underground storage installation put into operation by the method of any preceeding claim, the installation being characterized in that the leakproof inner lining (2) includes at least one solid load bearing structure fixed to the rock and made up of independent voussoir slabs (22) capable of shifting relative to one another, and a deformable leakproofing membrane (24) supported by said structure and defining the inside of the cavity (1) in such a manner that the lining (2) can accommodate stresses and deformations as generated by inserting hydrocarbon at very low temperature, even after the water table has moved back up.

7. A storage installation according to claim 6, in which drainage wells (4) going down to a depth deeper than the cavity are provided in proximity to the cavity for the purpose of lowering the water table below the cavity.

8. A storage installation according to claim 6 or claim 7, in which the voussoir slabs (22) are juxtaposed edge-to-edge thereby defining a regular array, with the leakproofing membrane (24) including a network of orthogonal waves with at least some of the waves being in alignment with the edges of the voussoir slabs so as to give the covering the flexibility required for adapting to movements of the rock generated by temperature variations caused by inserting the hydrocarbon.

9. A storage installation according to claim 6, 7, or 8, in which the lining further includes, between the membrane (24) and the load carrying structure, a layer made of juxtaposed insulating panels defining an array that coincides in superposition with the array of voussoir slabs (22).
